# EUROPEAN PATENT APPLICATION

(11) **EP 4 800 920 A1**
(43) Date of publication of application: **02.09.2026**
(21) Application number: 24904373.8
(22) Date of filing: 11.12.2024
(51) Int. Cl.: H02S 30/00, C23C 2/06, B21D 5/14, B21D 19/14

(54) **STEEL FRAME FOR PHOTOVOLTAIC MODULE AND MANUFACTURING METHOD THEREOF**

(30) Priority: 15.12.2023 KR 20230182667
(71) Applicant: POSCO Co., Ltd, Gyeongsangbuk-do 37859 (KR)
(72) Inventor: HA, Taehyu, Seoul 07642 (KR); SHIN, Seunghoon, Incheon 21998 (KR); HAN, Kyuhong, Incheon 22764 (KR)
(74) Representative: Meissner Bolte Partnerschaft mbB
(86) International application number: PCT/KR2024/096722
(87) International publication number: WO 2025/127808

(57) **Abstract**

According to the present disclosure, a steel frame for a photovoltaic module includes a frame member formed by bending a single alloy coated steel sheet and having an insertion part into which a photovoltaic panel is inserted and a hollow part forming a closed cross-section, and the alloy coated steel sheet includes a Mg-Al-Zn-based plating layer on a surface of a steel sheet having a yield strength of 280 to 350 MPa.

## Description

### [Technical Field]

The present disclosure relates to a steel frame for a photovoltaic module and a manufacturing method thereof.

### [Background Art]

Generally, a photovoltaic module is a power generation device used outdoors and requires durability under very severe conditions such as ultraviolet rays, wind and snow, salt damage, acid rain, freezing, accumulation of pollution, and occurrence of microorganisms.

Since such a photovoltaic module is mainly installed outdoors, it includes a rectangular frame to secure the rigidity of a plate. A frame for a photovoltaic module applies an aluminum extruded material to provide a shape optimized for the photovoltaic module, but has the following disadvantages. First, in the case where exposed to a large load such as a typhoon due to low material elongation, there is a concern of causing brittle fracture of the frame. In addition, there is a concern of causing galvanic corrosion due to a surface potential difference with a galvanized product mainly used as a lower support structure. In addition, the aluminum extruded material is a material that generates a large amount of carbon during the extraction and processing of the raw material. Based on the finished photovoltaic module product, the aluminum frame accounts for 8 to 13% of the total weight, but the carbon emission amount accounts for 15 to 20% of the carbon emission amount of the finished module. In addition, aluminum is a material with high price volatility of the raw material, affecting the stable product supply of module suppliers.

### [Disclosure]

### [Technical Problem]

An aspect of the present disclosure is to provide a steel frame for a photovoltaic module capable of securing strength and rigidity equivalent to or higher than those of an aluminum frame, and a manufacturing method thereof.

### [Technical Solution]

According to an embodiment of the present disclosure, provided is a steel frame for a photovoltaic module comprising a frame member formed by bending a single alloy coated steel sheet and having an insertion part into which a photovoltaic panel is inserted and a hollow part forming a closed cross-section, wherein the alloy coated steel sheet includes a Mg-Al-Zn-based plating layer on a surface of a steel sheet having a yield strength of 280 to 350 MPa.

The plating layer may include, based on a mass ratio, 2.5 to 3.5% of magnesium (Mg), 2.0 to 3.0% of aluminum (Al), and the remainder of zinc (Zn).

The frame member may be provided in a double sheet structure in which an outer panel and an inner panel overlap in a cross-section excluding a portion forming the hollow part.

The frame member may include an upper frame part located above the insertion part and a lower frame part extending from a lower surface of the hollow part, and a hemming joint may be provided in the upper frame part.

A plurality of clinching joints may be provided in the hemming joint.

An adhesive sealant may be provided between the insertion part and the photovoltaic panel.

The frame member may include an upper frame part located above the insertion part and a lower frame part extending from a lower surface of the hollow part, and a hemming joint may be provided in the lower frame part.

A plurality of clinching joints may be provided in the hemming joint.

The frame member may include a long-side frame member and a short-side frame member, and may further include a corner key member including a first panel inserted into a hollow part of the long-side frame member to connect a corner of the long-side frame member and the short-side frame member, and a second panel intersecting the first panel and inserted into a hollow part of the short-side frame member.

The corner key member may have a C-shaped cross-section.

The frame member may be provided with a locking part partially deformed and depressed, and the corner key member may be provided with a locking hole in which the locking part is caught.

The corner key member may be formed of the same material as the frame member.

According to an embodiment of the present disclosure in another aspect, in a method for manufacturing a steel frame for a photovoltaic module, provided is a method for manufacturing a steel frame for a photovoltaic module wherein the frame member is manufactured using a roll forming process.

The method may include preparing a jig apparatus including a pressing jig provided with a locking part forming protrusion, an insertion jig provided with a protrusion insertion groove corresponding to the locking part forming protrusion, and a dismantling jig supporting the insertion jig; inserting the insertion jig and the dismantling jig into the hollow part; and bringing the pressing jig into pressure contact with the frame member using a press machine to form the locking part.

After forming the locking part, the dismantling jig may be withdrawn from the hollow part.

### [Advantageous Effects]

According to an embodiment of the present disclosure, by using an alloy coated steel material having excellent corrosion resistance and yield strength, it is possible to secure structural stability and durability equivalent to or higher than those of an aluminum frame.

In addition, according to an embodiment of the present disclosure, it is possible to reduce carbon emissions compared to the application of an aluminum frame.

### [Description of Drawings]

FIG. 1 is a perspective view showing a photovoltaic module according to an embodiment of the present disclosure.
FIG. 2 is a view showing a cross-section of a frame member according to an embodiment of the present disclosure.
FIG. 3 is a perspective view of a frame member according to an embodiment of the present disclosure.
FIG. 4 is a cross-sectional view showing a state in which a photovoltaic panel is coupled to a frame member according to an embodiment of the present disclosure.
FIG. 5 is a view showing a cross-section of a frame member according to another embodiment of the present disclosure.
FIG. 6 is a perspective view of a frame member according to another embodiment of the present disclosure.
FIG. 7 is an exploded perspective view showing a corner coupling portion of a steel frame for a photovoltaic module according to an embodiment of the present disclosure.
FIG. 8 is a perspective view showing a corner key member according to an embodiment of the present disclosure.
FIG. 9 is a perspective view showing a corner key member according to another embodiment of the present disclosure.
FIG. 10 is a cross-sectional view showing a connection portion between a corner key member and a frame according to an embodiment of the present disclosure.
FIG. 11 is a perspective view showing a jig apparatus according to an embodiment of the present disclosure.
FIG. 12 is a view showing an operating state of a jig apparatus according to an embodiment of the present disclosure.
FIG. 13 is a view showing a state in which a dismantling jig of a jig apparatus is separated according to an embodiment of the present disclosure.

### [Mode for Invention]

The embodiments described in this specification are merely the most preferred embodiments of the present invention and do not represent all of the technical spirit of the present invention, so it should be understood that there may be various equivalents or modifications that can replace them at the time of the present application.

In addition, the same reference numerals or signs presented in each drawing of the present disclosure indicate parts or components that perform substantially the same function.

In addition, terms used in the present disclosure are used to describe embodiments and are not intended to limit and/or restrict the disclosure. Singular expressions include plural expressions unless the context clearly indicates otherwise. In the present disclosure, terms such as "include" or "have" are intended to designate that features, numbers, steps, operations, components, parts, or combinations thereof described in the disclosure exist, and do not preclude the possibility of the existence or addition of one or more other features, numbers, steps, operations, components, parts, or combinations thereof in advance.

In addition, terms including ordinal numbers such as "first" and "second" used in the present disclosure may be used to describe various components, but the components are not limited by the terms, and the terms are used only for the purpose of distinguishing one component from another component. For example, a first component may be named a second component without departing from the scope of rights of the present disclosure, and similarly, a second component may be named a first component. The term "and/or" includes a combination of a plurality of related listed items or any item among a plurality of related listed items.

In addition, in the present disclosure, the meaning of 'identical' includes those having similar properties or similar within a certain range. Also, identical means 'substantially identical'. Substantially identical should be understood to mean that numerical values falling within an error range in manufacturing or numerical values corresponding to differences within a range that does not have meaning with respect to reference numerical values are included in the range of 'identical'.

In addition, terms such as "...part", "...device", "...block", "...member", and "...module" may mean a unit that processes at least one function or operation. For example, the terms may mean at least one hardware such as FPGA (field-programmable gate array) / ASIC (application specific integrated circuit), at least one software stored in a memory, or at least one process processed by a processor.

Singular expressions include plural expressions unless the context clearly indicates an exception.

Meanwhile, terms such as "front", "rear", "left", and "right" used in the following description are defined based on the drawings, and the shape and position of each component are not limited by these terms.

Hereinafter, preferred embodiments according to the present disclosure will be described in detail with reference to the accompanying drawings.

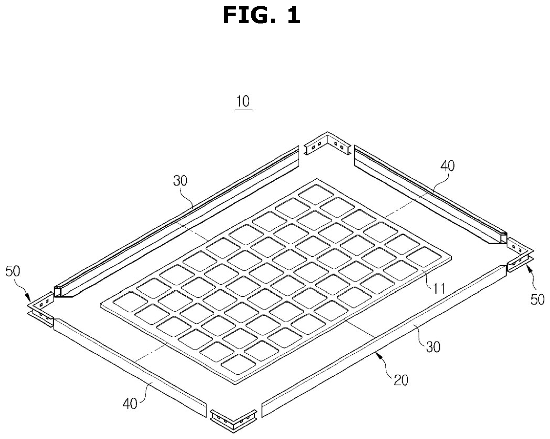

FIG. 1 is a perspective view showing a photovoltaic module according to an embodiment of the present disclosure.

Referring to FIG. 1, a photovoltaic module 10 according to an embodiment of the present disclosure may include a photovoltaic panel 11 and a steel frame 20 for a photovoltaic module coupled to an edge of the photovoltaic panel 11.

The steel frame 20 for a photovoltaic module may include frame members 30 and 40 coupled to the edge of the photovoltaic panel 11.

The frame members 30 and 40 include a pair of long-side frame members 30 surrounding long sides of the photovoltaic panel 11 and a pair of short-side frame members 40 surrounding short sides of the photovoltaic panel 11, and the pair of long-side frame members 30 and the pair of short-side frame members 40 may be connected to each other by a corner key member 50.

The frame members 30 and 40 and the corner key member 50 may be formed by bending an alloy coated steel sheet. Considering the influence of local buckling and processing load, the alloy coated steel sheet may include a Mg-Al-Zn-based plating layer on a surface of a steel sheet having a yield strength of 280 to 350 MPa. Such a plating layer may include, based on a mass ratio, 2.5 to 3.5% of Mg, 2.0 to 3.0% of Al, and the remainder of Zn. Through this, strength and rigidity equivalent to or higher than those of existing aluminum frames can be secured. In addition, since the frame members 30 and 40 and the corner key member 50 are made of the same material, it is possible to prevent the occurrence of corrosion due to a potential difference between the two materials.

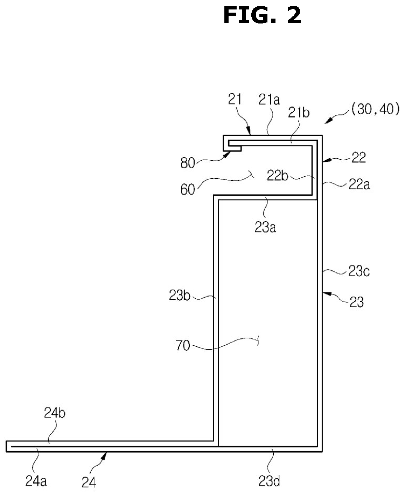

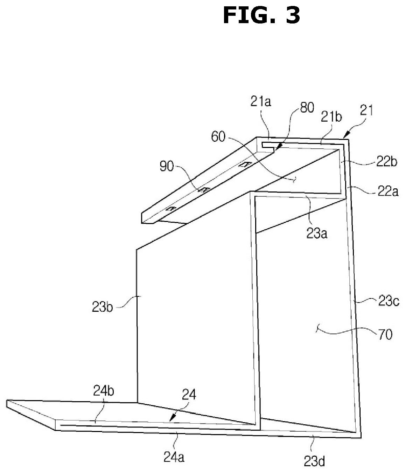

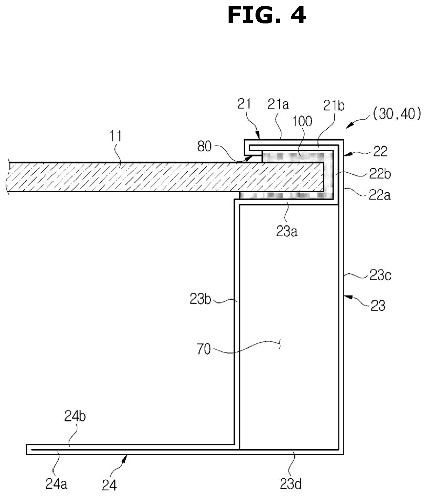

FIG. 2 is a view showing a cross-section of a frame member according to an embodiment of the present disclosure, FIG. 3 is a perspective view of a frame member according to an embodiment of the present disclosure, and FIG. 4 is a cross-sectional view showing a state in which a photovoltaic panel is coupled to a frame member according to an embodiment of the present disclosure.

Referring to FIGS. 2 to 4, the frame members 30 and 40 may be manufactured by roll forming an alloy coated steel sheet.

The long-side frame member 30 and the short-side frame member 40 constituting the frame members 30 and 40 may each be configured with the same cross-sectional shape.

The frame members 30 and 40 may include an insertion part 60 into which the photovoltaic panel 11 is inserted and a hollow part 70 forming a closed cross-section. The insertion part 60 and the hollow part 70 may be formed by bending a single alloy coated steel sheet a plurality of times by roll forming.

The frame members 30 and 40 may be provided with a double sheet structure in a cross-section excluding a portion forming the hollow part 70 for strength reinforcement.

The frame members 30 and 40 may include an upper frame part 21, a sidewall frame part 22, a hollow frame part 23, and a lower frame part 24.

The upper frame part 21, the sidewall frame part 22, and the lower frame part 24 may each be provided in a double sheet structure in which an outer panel and an inner panel overlap, and the hollow frame part 23 forming the hollow part 70 may be provided in a single sheet structure.

The upper frame part 21 may be located on an upper side of the insertion part 60, and the sidewall frame part 22 may be located on a lateral side of the insertion part 60. The insertion part 60 may be formed by the upper frame part 21, the sidewall frame part 22, and an upper surface 23a of the hollow frame part 23.

A hemming joint 80 may be provided in the upper frame part 21. The hemming joint 80 may be formed by bending an end of an outer panel 21a of the upper frame part 21 so as to overlap with an inside of an inner panel 21b.

A plurality of clinching joints 90 may be provided in the hemming joint 80. The hemming joint 80 and the inner panel 21b of the upper frame part 21 may be joined through a clinching process in a state of overlapping each other.

An adhesive sealant 100 may be filled between the photovoltaic panel 11 and the insertion part 60. At this time, the hemming joint 80 provided in the upper frame part 21 may help to facilitate the filling work of the adhesive sealant 100 in the insertion part 60. The adhesive sealant 100 may uniformly transfer the load of the photovoltaic panel 11 to the frame members 30 and 40 through adhesion and cushioning action of the photovoltaic panel 11 to the insertion part 60.

The hollow frame part 23 may include the upper surface 23a forming a lower side of the insertion part 60 and an upper part of the hollow part 70, both side surfaces 23b and 23c forming both side surfaces of the hollow part 70, and a lower surface 23d forming a lower part of the hollow part 70. Such a hollow frame part 23 may be provided in a single sheet structure.

The lower frame part 24 may extend inward (in the direction of the photovoltaic panel) from the lower surface 23d of the hollow frame part 23. The lower frame part 24 may be provided in a double sheet structure in which an inner panel 24b and an outer panel 24a overlap.

Such frame members 30 and 40 may be manufactured by sequentially forming by roll forming in the order of the inner panel 21b of the upper frame part 21 forming the upper part of the insertion part 60, an inner panel 22b of the sidewall frame part 22, the upper surface 23a of the hollow part 70, one side surface 23b of the hollow part 70, the inner panel 24b of the lower frame part 24, the outer panel 24a of the lower frame part 24, the lower surface 23d of the hollow part 70, the other side surface 23c of the hollow part 70, an outer panel 22a of the sidewall frame part 22, the outer panel 21a of the upper frame part 21, and the hemming joint 80.

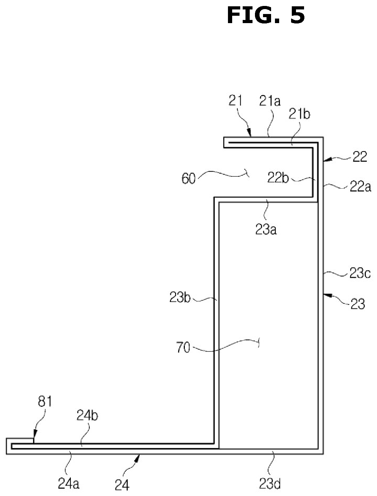

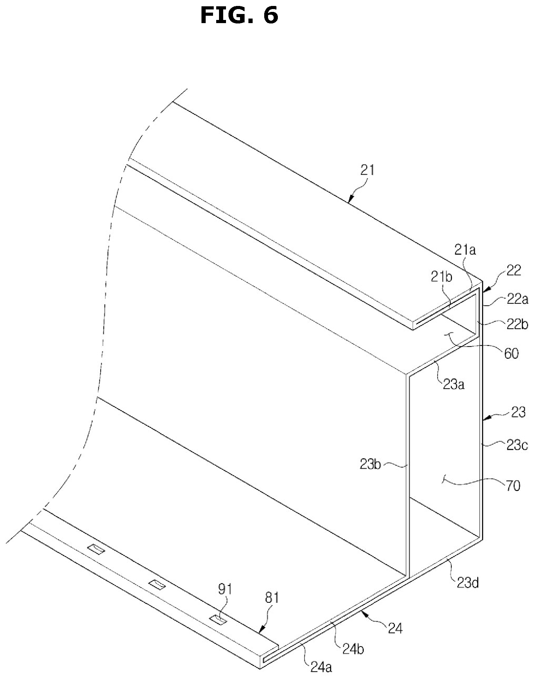

FIG. 5 is a view showing a cross-section of a frame member according to another embodiment of the present disclosure, and FIG. 6 is a perspective view of a frame member according to another embodiment of the present disclosure. Hereinafter, the same reference numerals are assigned to the same configurations, and detailed descriptions thereof are omitted.

Referring to FIGS. 5 and 6, the frame members 30 and 40 according to another embodiment of the present disclosure are the same as the above-described embodiment except that a hemming joint 81 is provided in the lower frame part 24.

Specifically, the hemming joint 81 may be provided in the lower frame part 24. The hemming joint 81 may be formed by bending an end of the outer panel 24a of the lower frame part 24 so as to overlap with an inside of the inner panel 24b. A plurality of clinching joints 91 may be provided in the hemming joint 81 provided in the lower frame part 24. The plurality of clinching joints 91 may be formed by a clinching process in a state where the hemming joint 81 and the inner panel 24b of the lower frame part 24 overlap each other.

Such frame members 30 and 40 may be manufactured by sequentially forming by roll forming in the order of the inner panel 24b of the lower frame part 24, one side surface 23b of the hollow part 70, the upper surface 23a of the hollow part 70, the inner panel 22b of the sidewall frame part 22, the inner panel 21b of the upper frame part 21, the outer panel 21a of the upper frame part 21, the outer panel 22a of the sidewall frame part 22, the other side surface 23c of the hollow frame part 23, the lower surface 23d of the hollow frame part 23, the outer panel 24a of the lower frame part 24, and the hemming joint 81.

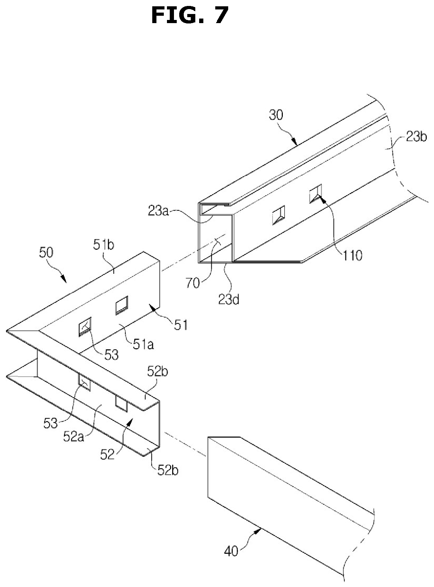

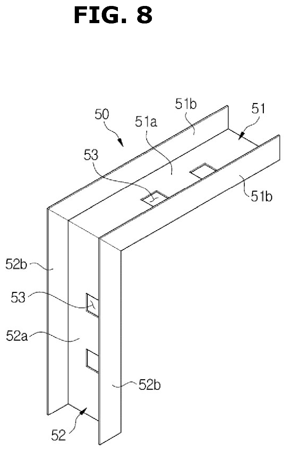

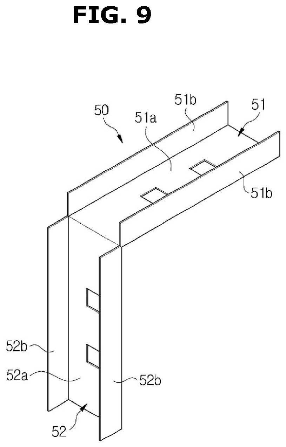

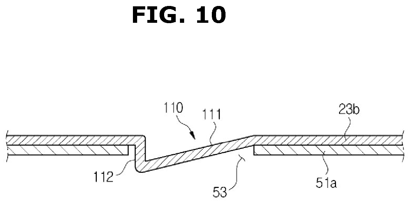

FIG. 7 is an exploded perspective view showing a corner coupling portion of a steel frame for a photovoltaic module according to an embodiment of the present disclosure, FIG. 8 is a perspective view showing a corner key member according to an embodiment of the present disclosure, FIG. 9 is a perspective view showing a corner key member according to another embodiment of the present disclosure, and FIG. 10 is a cross-sectional view showing a connection portion between a corner key member and a frame according to an embodiment of the present disclosure.

Referring to FIGS. 7 to 10, the corner key member 50 according to an embodiment of the present disclosure may include a first panel 51 and a second panel 52 provided to intersect each other. The corner key member 50 may be provided as an 'L'-shaped angle member. The first panel 51 and the second panel 52 may be provided as a member having a C-shaped cross-section or a U-shaped cross-section. As shown in FIG. 8, the first panel 51 and the second panel 52 intersecting each other may be coupled to each other by welding. Alternatively, as shown in FIG. 9, the first panel 51 and the second panel 52 intersecting each other may be formed by bending and manufacturing a single member.

The first panel 51 may be inserted into the hollow part 70 of the long-side frame member 30, and the second panel 52 may be inserted into the hollow part 70 of the short-side frame member 40.

The first panel 51 may include a first contact panel 51a contacting one side surface 23b of the hollow part 70 of the long-side frame member 30, and a pair of first flanges 51b bent at both ends of the first contact panel 51a, respectively. Upon insertion into the hollow part 70 of the long-side frame member 30, the pair of first flanges 51b may contact the upper surface 23a and the lower surface 23d of the hollow part 70 of the long-side frame member 30.

The second panel 52 may include a second contact panel 52a contacting one side surface 23b of the hollow part 70 of the short-side frame member 40, and a pair of second flanges 52b bent at both ends of the second contact panel 52a, respectively. Upon insertion into the hollow part 70 of the short-side frame member 40, the pair of second flanges 52b may contact the upper surface 23a and the lower surface 23d of the hollow part 70 of the short-side frame member 40.

At least one locking hole 53 may be formed through each of the first panel 51 and the second panel 52. The locking hole 53 may be provided in a rectangular or square shape. The locking hole 53 may be provided in the first contact panel 51a and the second contact panel 52a, respectively.

A locking part 110 provided in the frame members 30 and 40 may be caught and supported in the locking hole 53. The locking part 110 may be provided in a form in which a part of the frame members 30 and 40 is deformed and protrudes toward the hollow part 70. The locking part 110 may be located at a position corresponding to a portion where the corner key member 50 is coupled in the frame members 30 and 40. The locking part 110 may be provided on one side surface 23b forming the hollow part 70 in the frame members 30 and 40. The locking part 110 may be formed integrally with the frame members 30 and 40 by being recessed to a certain depth from one side surface 23b of the frame members 30 and 40 through press forming. The locking part 110 may include an entry guide surface 111 and a locking surface 112. The entry guide surface 111 may extend obliquely toward the hollow part 70 from one side surface 23b of the frame members 30 and 40, and the locking surface 112 may extend perpendicularly to one side surface 23b of the frame members 30 and 40 at an end of the entry guide surface 111. Upon insertion and coupling of the corner key member 50 to the hollow part 70 of the frame members 30 and 40, the locking surface 112 of the locking part 110 is caught and supported by the locking hole 53 of the corner key member 50, whereby the corner key member 50 may be bound to the frame members 30 and 40 .

The locking part 110 provided in the frame members 30 and 40 may be manufactured using a jig apparatus. Hereinafter, a method for manufacturing the locking part 110 in the frame members 30 and 40 will be described.

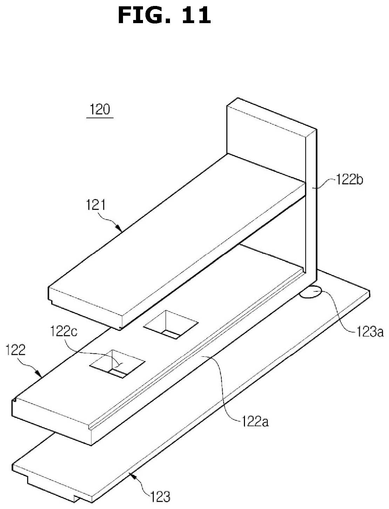

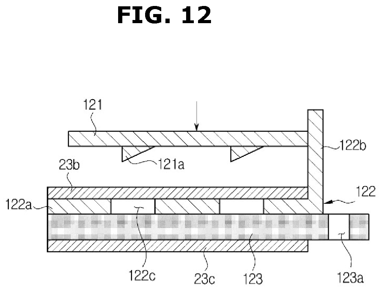

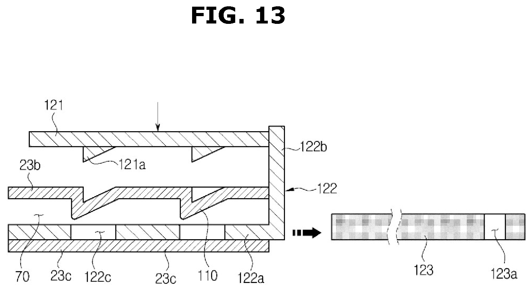

FIG. 11 is a perspective view showing a jig apparatus according to an embodiment of the present disclosure, FIG. 12 is a view showing an operating state of a jig apparatus according to an embodiment of the present disclosure, and FIG. 13 is a view showing a state in which a dismantling jig of a jig apparatus is separated according to an embodiment of the present disclosure.

Referring to FIGS. 11 to 13, a jig apparatus 120 forming the locking part 110 in the frame members 30 and 40 may include a pressing jig 121, an insertion jig 122, and a dismantling jig 123.

The pressing jig 121 may include a locking part forming protrusion 121a. The pressing jig 121 is connected to a press machine (not shown) and may move downward by the operation of the press machine. The locking part forming protrusion 121a may be formed in a sawtooth shape. The pressing jig 121 may be located outside the hollow part 70 of the frame members 30 and 40. The pressing jig 121 may be positioned to face one side surface 23b of the frame members 30 and 40 forming the hollow part 70 with a predetermined gap, and in the case where it descends by the operation of the press machine, it may come into pressure contact with one side surface 23b of the frame members 30 and 40.

The insertion jig 122 may be inserted into the hollow part 70 of the frame members 30 and 40. The insertion jig 122 may be in close contact with one side surface 23b of the frame members 30 and 40 inside the hollow part 70. The insertion jig 122 may include a first portion 122a extending in a transverse direction so as to be in close contact with one side surface 23b of the frame members 30 and 40 in the hollow part 70, and a second portion 122b extending in a longitudinal direction outside the hollow part 70. The first portion 122a may be provided with a protrusion insertion groove 122c corresponding to the locking part forming protrusion 121a provided on the pressing jig 121. The protrusion insertion groove 122c may accommodate the locking part forming protrusion 121a while the pressing jig 121 presses one side surface 23b of the frame members 30 and 40.

The dismantling jig 123 may be inserted inside the hollow part 70 of the frame members 30 and 40. The dismantling jig 123 may be provided to support the bottom of the insertion jig 122 inserted into the hollow part 70, that is, the bottom of the first portion 122a. The dismantling jig 123 may be interposed between the insertion jig 122 and the other side surface 23c forming the hollow part 70 within the hollow part 70. The dismantling jig 123 may include a through hole 123a on which a latch is hung to facilitate withdrawal work from the hollow part 70.

Through this, in order to form the locking part 110 in the frame members 30 and 40, as shown in FIG. 12, the first portion 122a of the insertion jig 122 and the dismantling jig 123 are inserted into the hollow part 70 of the frame members 30 and 40. At this time, the second portion 122b of the insertion jig 122 may contact an end of one side surface 23b of the frame members 30 and 40. In a state where the insertion jig 122 and the dismantling jig 123 are inserted into the hollow part 70, the insertion jig 122 may be in close contact with one side surface 23b of the frame members 30 and 40, and the dismantling jig 123 may be in close contact with the other side surface 23c of the frame members 30 and 40.

In the case where the insertion of the insertion jig 122 and the dismantling jig 123 into the hollow part 70 is completed, the locking part 110 is generated by moving the pressing jig 121 using a press machine to press-contact one side surface 23b of the frame members 30 and 40. Thereafter, as shown in FIG. 13, in the case where the dismantling jig 123 is withdrawn from the hollow part 70, the insertion jig 122 moves downward, so that the jig apparatus 120 can be easily withdrawn from the hollow part 70.

Although the technical spirit of the present invention as described above has been described by specific embodiments, the scope of rights of the present invention is not limited to these embodiments. Various embodiments that can be modified or deformed by those skilled in the art within the scope not departing from the gist as the technical spirit of the present invention specified in the claims will also belong to the scope of rights of the present invention.

## Claims

1. A steel frame for a photovoltaic module comprising:
a frame member formed by bending a single alloy coated steel sheet and having an insertion part into which a photovoltaic panel is inserted and a hollow part forming a closed cross-section,
wherein the alloy coated steel sheet includes a Mg-Al-Zn-based plating layer on a surface of a steel sheet having a yield strength of 280 to 350 MPa.

2. The steel frame for a photovoltaic module according to Claim 1, wherein the plating layer includes, based on a mass ratio, 2.5 to 3.5% of magnesium (Mg), 2.0 to 3.0% of aluminum (Al), and the remainder of zinc (Zn).

3. The steel frame for a photovoltaic module according to Claim 1, wherein the frame member is provided in a double sheet structure in which an outer panel and an inner panel overlap in a cross-section excluding a portion forming the hollow part.

4. The steel frame for a photovoltaic module according to Claim 3, wherein the frame member includes an upper frame part located above the insertion part and a lower frame part extending from a lower surface of the hollow part, and
a hemming joint is provided in the upper frame part.

5. The steel frame for a photovoltaic module according to Claim 4, wherein a plurality of clinching joints are provided in the hemming joint.

6. The steel frame for a photovoltaic module according to Claim 4, wherein an adhesive sealant is provided between the insertion part and the photovoltaic panel.

7. The steel frame for a photovoltaic module according to Claim 3, wherein the frame member includes an upper frame part located above the insertion part and a lower frame part extending from a lower surface of the hollow part, and
a hemming joint is provided in the lower frame part.

8. The steel frame for a photovoltaic module according to Claim 7, wherein a plurality of clinching joints are provided in the hemming joint.

9. The steel frame for a photovoltaic module according to Claim 1, wherein the frame member includes a long-side frame member and a short-side frame member, and
further comprising a corner key member including a first panel inserted into a hollow part of the long-side frame member to connect a corner of the long-side frame member and the short-side frame member, and a second panel intersecting the first panel and inserted into a hollow part of the short-side frame member.

10. The steel frame for a photovoltaic module according to Claim 9, wherein the corner key member has a C-shaped cross-section.

11. The steel frame for a photovoltaic module according to Claim 9, wherein the frame member is provided with a locking part partially deformed and depressed, and
the corner key member is provided with a locking hole in which the locking part is caught.

12. The steel frame for a photovoltaic module according to Claim 9, wherein the corner key member is formed of the same material as the frame member.

13. A method for manufacturing the steel frame for a photovoltaic module of Claim 11, wherein the frame member is manufactured using a roll forming process.

14. The method for manufacturing a steel frame for a photovoltaic module according to Claim 13, comprising:
preparing a jig apparatus including a pressing jig provided with a locking part forming protrusion, an insertion jig provided with a protrusion insertion groove corresponding to the locking part forming protrusion, and a dismantling jig supporting the insertion jig;
inserting the insertion jig and the dismantling jig into the hollow part; and
forming the locking part by bringing the pressing jig into pressure contact with the frame member using a press machine.

15. The method for manufacturing a steel frame for a photovoltaic module according to Claim 14, wherein the dismantling jig is withdrawn from the hollow part after forming the locking part.
